# EUROPÄISCHE PATENTSCHRIFT

(11) **EP 0 572 830 B1**
(45) Veröffentlichungstag und Bekanntmachung des Hinweises auf die Patenterteilung: **02.10.1996**
(21) Anmeldenummer: 93107710.1
(22) Anmeldetag: 12.05.1993
(51) Int. Cl.: B07C 5/36, B07C 5/34, B07C 5/16, B07C 5/04

(54) **Verfahren zum Identifizieren, Etikettieren und Zielsteuern von Waren**
Method for identification, labelling and directing of articles
Procédé pour identifier, étiqueter et diriger des articles

(30) Priorität: 04.06.1992 DE 4218429
(43) Veröffentlichungstag der Anmeldung: 08.12.1993
(73) Patentinhaber: Christ, Ferdinand, D-67808 Weitersweiler (DE)
(72) Erfinder: Christ, Ferdinand, D-67808 Weitersweiler (DE)
(74) Vertreter: Schubert, Siegmar, Dipl.-Ing.

(56) Entgegenhaltungen:
- EP-A- 0 433 828
- WO-A-86/06305
- DE-A- 4 028 388

## Beschreibung

Die Erfindung betrifft ein Verfahren zum Identifizieren, ggfs. zum Etikettieren, und zum Zielsteuern von Waren am Wareneingang und/oder am Warenausgang eines Warenlagers.

Waren müssen am Wareneingang eines Warenlagers identifiziert, in aller Regel etikettiert und auch zielgesteuert werden. Das bedeutet, daß man den Inhalt der einlangenden Waren kennen muß, insbesondere nach Anzahl, Art und Hersteller der betreffenden Waren und man muß den betreffenden, im allgemeinen in einem Karton oder dergleichen verpackten Waren Informationen mitgeben, wohin die Waren im Warenlager gebracht werden sollen. Dies wird auch als Etikettieren und Zielsteuern bezeichnet.

Üblicherweise erfolgt dies beim Stand der Technik von Hand. Dazu müssen die Waren aber von einem Transportband mehrfach abgesetzt und wieder auf das Transportband aufgesetzt werden und die gesamte Prüfung erfolgt zeitaufwendig und personalaufwending von Hand.

Der DE-40 28 388 A1 kann ein Verfahren zum Identifizieren und Zielsteuern von Waren am Wareneingang und/oder am Warenausgang eines Warenlagers entnommen werden, wobei die mit einem Informationscode versehenen Waren im Durchlauf durch mehrere Stationen am Wareneingang und/oder am Warenausgang des Lagers transportiert werden, in denen die Waren maschinell identifiziert und gewogen werden. Der erfaßte Identifikationscode und das ermittelte Gewicht der betreffenden Ware wird an einem Rechner zur Prüfung übermittelt. Bei korrekten Werten wird die betreffende Ware weiter transportiert und bei fehlerhaften Werten wird sie ausgeschleust.

Demgegenüber liegt der vorliegenden Erfindung die Aufgabe zugrunde, das Verfahren zum Identifizieren, ggfs. Etikettieren, und Zielsteuern von Waren am Wareneingang und/oder am Warenausgang eines Warenlagers so zu führen, daß die im Durchlauf durch die Stationen der Kontrollstraße hindurchgehenden Waren daraufhin überprüft werden, ob die hier erhaltenen Informationen in sich stimmig sind.

Die Lösung dieser Aufgabe erfolgt durch die Merkmale des Hauptanspruchs. Wichtig ist es demnach, daß eine Plausibilitätsprüfung durchgeführt wird, die angibt, ob die in den Stationen ermittelte Identifizierung, das Gewicht und das Volumen in sich stimmig sind.

Die Waren - in der Regel einander gleiche oder unterschiedliche Kartons - werden somit im Durchlauf durch die erwähnten Stationen am Wareneingang bzw. am Warenausgang des Lagers transportiert, in denen die Waren maschinell identifiziert werden. Es wird auch ihr Gewicht und ihr Volumen festgestellt, wobei zur Volumenmessung es ausreichen kann, wenn die Grundfläche und die Höhe der betreffenden Waren gemessen wird, vorzugsweise wenn es sich um quaderförmige Waren handelt, d.h. um in Umkartons verpackte Waren. Die Volumenmessung kann aber auch auf andere Art und Weise erfolgen.

Anschließend werden die Waren vorzugsweise mit einer Zielsteuerung etikettiert. Dies ist aber entbehrlich, wenn es nur ein einziges Ziel gibt, das die Waren dann automatisch ansteuern.

Das Wiegen kann auch ein Zählen sein, nämlich wenn gleichschwere Waren gewogen werden. Dann zählt die Waage die Anzahl der Artikel.

Weil die geschilderten Verfahrensschritte im Durchlauf erfolgen, müssen die Waren nicht mehr angehalten werden und die erfindungsgemäße Verfahrensführung zeichnet sich also durch eine hohe Schnelligkeit aus ohne Stockungen im Warenlauf. All dies erfolgt maschinell und grundsätzlich ohne Eingriffe von Hand. In einer ersten Station dieser sogenannten Kontrollstraße werden die Waren identifiziert. Dies erfolgt mit Hilfe eines geeigneten Lesegeräts, welches insbesondere die notwendigen Informationen über die betreffenden Waren einschließlich ihrer Herkunft (Hersteller) liefert, beispielsweise die Artikelnummer, die Artikelfarbe, die Artikelgröße usw.

Anschließend gelangen die so identifizierten Waren zu einer Wiegekontrolle, wo im Durchlauf das Gesamtgewicht der Ware, d.h. einschließlich der in der Regel vorhandenen Verpackung (Karton) gemessen wird. Nachdem alle Informationen an einen zentralen Rechner des Warenlagers gelangen, kann durch diese Wiegekontrolle kontrolliert werden, ob die richtigen Artikel und in der richtigen Anzahl im Karton enthalten sind. Dieser Gedanke ist im übrigen in der EP 0 052 232 B1 schon beschrieben.

Anschließend wird die Grundfläche und die Höhe der betreffenden Ware gemessen. Dies kann auch als Volumenmessung bezeichnet werden. Die Information über die von der Ware eingenommene Grundfläche benötigt man, um zu wissen, welche Grundfläche die Ware bei später eingesetzten Transportgeräten benötigt und die Information über die Höhe der Ware benötigt man, damit die Ware anschließend in ein Lager transportiert wird, welches eine ausreichende Höhe hat, damit die Ware dort untergebracht werden kann. Für das Lager ist im übrigen auch die hier erhaltene Information über die Grundfläche wichtig.

Es kann natürlich zuerst die Volumenmessung und dann die Wiegekontrolle erfolgen.

Anschließend wird die Ware etikettiert, d.h. der Istzustand wird aufgedruckt. Beispielsweise werden der Ware hier Informationen mitgegeben über die Artikelnummer, Farbe, Größe, Gesamtgewicht einschließlich der Stückzahl, das von der Ware eingenommene Volumen, welche Information, wie erwähnt, wichtig für den Lagerplatz ist, weiterhin die Zielsteuerdaten für den Lagerort im Warenlager, die im übrigen aus dem Volumen und dem Gewicht automatisch zuordenbar sind. Hier erhält die Ware also auch die Informationen für die Zielsteuerung der Ware an den gewünschten Ort im Warenlager.

Alle Informationen gelangen an einen Zentralrechner und werden dort ausgewertet.

Weiterhin wird es bevorzugt, wenn nach dem Etikettieren der Waren die erhaltenen Informationen oder zumindest eine Auswahl daraus gebucht werden. Der Rechner erstellt anhand dieser Informationen also die Rechnungen, er weiß den Ort der Ware im Zentrallager, er kennt den Inhalt des Zentrallagers usf.

Die Erfindung wird im folgenden anhand eines Ausführungsbeispiels näher erläutert, aus dem sich weitere wichtige Merkmale ergeben. Es zeigt:

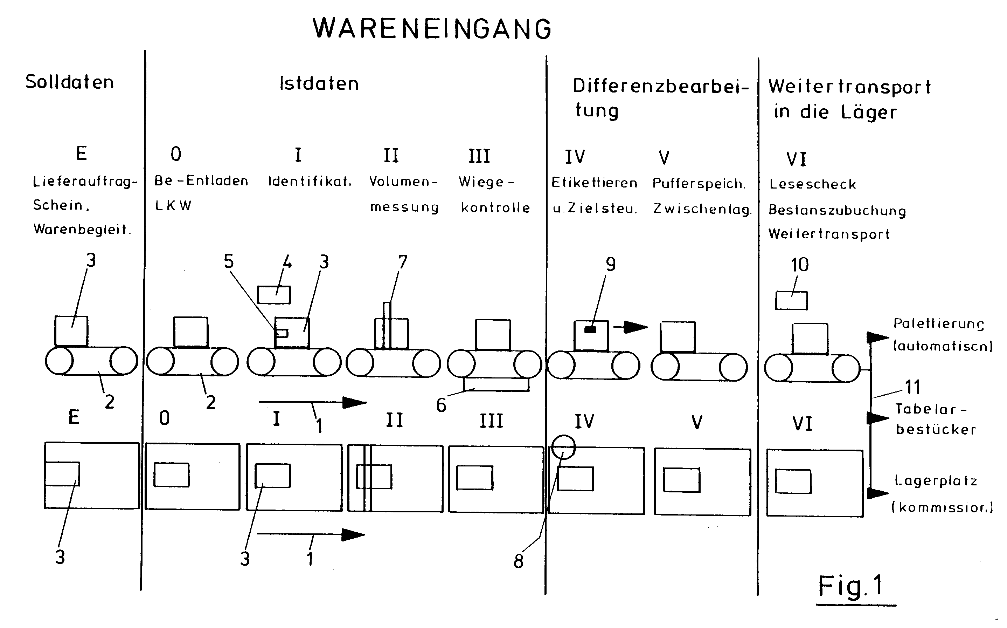

- Fig. 1 -: schematisch in Seitenansicht und Draufsicht die wesentlichen erfindungsgemäßen Verfahrensschritte beim Wareneingang;
- Fig. 2 -: ein entsprechendes Schema der Verfahrensschritte beim Warenausgang.

Es sei angenommen, daß die Ware in Richtung des Pfeiles 1 die Kontrollstraße durchläuft (vgl. Fig.). Hierzu sind ein oder mehrere Förderbänder 2 vorgesehen, auf denen die Waren 3 transportiert werden. Beim gezeigten Beispiel ist dies ein Karton, der mit mehreren Artikeln gefüllt ist.

In einer ersten Station I werden die Waren identifiziert. Hierzu ist ein Leser 4 vorgesehen, der ein Etikett 5 der Ware 3 liest.

Anschließend erfolgt in einer weiteren Station II die Volumenmessung, wozu die Grundfläche der Ware 3 und deren Höhe gemessen wird. Hierzu ist beispielsweise ein U-förmiger Meßrahmen 7 vorgesehen, der nach Art eines Lichtvorhanges arbeitet. Das bedeutet, daß die Ware 3 eine entsprechende Höhe der Lichtschranken abschattet und daraus ergibt sich die Höhe des quaderförmigen Kartons. Aus der bekannten Fördergeschwindigkeit und der Zeit der Abschattung ergibt sich die Länge des quaderförmigen Kartons und dessen Breite wird aus der abgeschatteten Breite des Lichtvorhanges gemessen.

Anschließend gelangt die Ware zu einer zweiten Station III, bei der mit Hilfe einer Waage 6 das Gewicht der Ware 3 im Durchlauf gemessen wird.

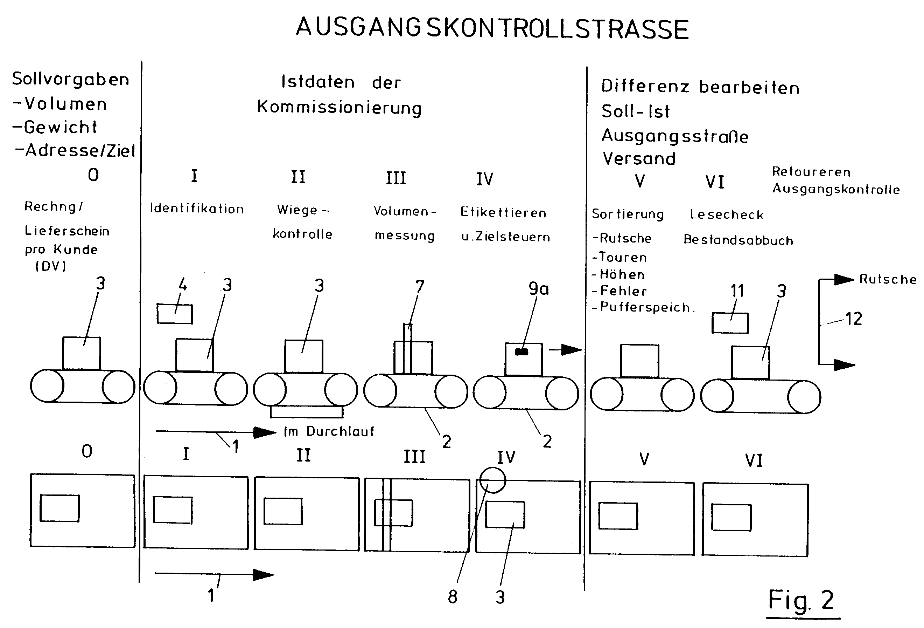

Es sei bemerkt, daß die Stationen II und III auch gegeneinander vertauscht sein können. S. Fig. 2. Es wird aber bevorzugt, zuerst das Volumen zu messen und anschließend das Gewicht.

Anschließend gelangt die Ware zu einer Station IV, in der das Etikettieren und Zielsteuern erfolgt. Hierzu wird mit Hilfe eines bei Pos.8 angedeuteten Druckers - der sich in Wirklichkeit in Höhe des Artikels 3 befindet - ein Etikett 9 aufgedruckt, welches die eingangs erläuterten Informationen enthält, so daß der Artikel innerhalb des Warenlagers zielgesteuert werden kann.

Es kann auch ein weiterer Leser 10 vorgesehen sein, der das Etikett 9, ggfs. auch das Etikett 5, liest und der die Plausibilitätsprüfung durchführt und der die Informationen dem Zentralrechner zuleitet zwecks Durchführung der eingangs erläuterten Buchung. Dies kann hinter einer Station V erfolgen, die als Pufferspeicher oder Zwischenlager dient, und in einer Station VI.

Die Kartons verlassen dann die Kontrollstraße an deren Ausgang in Richtung der Pfeile 11, beispielsweise zur Palettierung, zu einem Tablar-Bestücker oder zu einem Lagerplatz.

Der in der Station I vorgesehene Leser 4 ist beispielsweise eine Kamera eines Scanners, wobei bevorzugt wird, insgesamt sechs Scanner anzuordnen, die die Ware allseitig abtasten, ein Transponder, eine Tastatur oder eine sonstige Identifizierungsvorrichtung, die aus der Scannertechnik an sich bekannt ist.

Die Einzelheiten der Vorrichtung bei der Wiegekontrolle (Station III) sind in der erwähnten europäischen Patentschrift näher erläutert.

Für die Station II sieht man einen Lichtvorhang, eine oder mehrere Lichtschranken oder dergl. vor.

In der Station IV wird beispielsweise die Artikelidentität (nach Artikelnummer, Farbe, Größe usf.) angegeben, das Gesamtgewicht plus die im Karton enthaltene Stückzahl, das Volumen der Ware mit Angabe des Lagerplatzes im Lager, die Ziesteuerdaten für den Lagerort, die aus dem Volumen und dem Gewicht automatisch zugeordnet werden können, usf.

Vor der Station I kann sich eine Station 0 zum Be-und Entladen der Artikel 3, beispielsweise von einem LKW, befinden und vor dieser eine Station E, in der die Solldaten mit einer Datenverareitung DV erfaßt werden.

An der Identifikations-Station I wird also der eingehende Warenbestand automatisch gebucht, ohne daß es hierzu des Eingriffs einer Person bedarf. Am Ende der Kontrollstrecke ist die Ware kontrolliert, beispielsweise als Menge, Stückzahl, Inhalt pro Karton, es wird der Wareneingang aufgelöst, d.h. die Zielorte im Lager werden erstellt, der Stückwert wird ermittelt und die Zielsteuerung für den automatischen Transport wird erstellt einschl. der Erfolgsmeldung und der Buchung des Bestandes.

Es ist ersichtlich, daß alle Vorgänge automatisch und im Durchlauf erfolgen. Dadurch kommt man auf eine große Stückleistung und ermöglicht einen automatischen Wareneingang.

Das erfindungsgemäße Verfahren läßt sich genausogut auch für den Warenausgang verwenden. (Vgl. Fig. 2.) An der Station I werden dann die ausgehenden Waren identifiziert. An der Station II wird das Gewicht kontrolliert bzw. festgestellt. Diese Information ist auch für die Postabrechnung und ggfs. Frankierung wichtig. Das in der Station III gemessene Volumen ist beispielsweise wichtig für eine optimale Beladung eines LKWs oder eines anderen Transportfahrzeugs zum Abtransport der Waren und die Zielsteuerung in der Station IV ist beispielsweise wichtig für die interne Wegsteuerung im Warenlager vom Warenausgang des eigentlichen Warenlagers, wo sich die beschriebene Kontrollstraße befindet, bis zum Übergabepunkt vom Warenlager zu einer Weitertransportmöglichkeit, beispielsweise zu einem LKW. Hier wird auch ein Etikett 9a aufgedruckt.

Hinter der Station IV befindet sich eine Station V zum Sortieren und dahinter eine Station VI zum Abbuchen des Bestandes mit Hilfe eines Lesegeräts 11.

Danach verlassen die Artikel in Pfeilrichtung 12 die Ausgangskontrolle und werden verladen bzw. Retouren werden zum Versand gegeben.

Vor der Station I können in einer Station 0 die Sollvorgaben in die Datenverarbeitung DV eingegeben werden.

Die Tätigkeiten im Wareneingang bzw. Warenausgang sind also vollständig automatisiert und hintereinander in jeweils einer Kontrollstraße angeordnet. Nach der Kontrollstraße sind die Artikel gekennzeichnet, geprüft und zum Weitertransport kodiert.

## Patentansprüche

1. Verfahren zum Identifizieren, ggfs. zum Etikettieren, und zum Zielsteuern von Waren am Wareneingang und/oder am Warenausgang eines Warenlagers, wobei die Waren im Durchlauf durch mehrere Stationen am Wareneingang und/oder am Warenausgang des Lagers transportiert werden, in denen die Waren maschinell identifiziert, gewogen, ihr Volumen gemessen und ggfs. etikettiert werden, wobei die dabei erhaltenen Informationen an einen Rechner übermittelt werden, der die ihm übermittelten Daten mit Solldaten vergleicht und entsprechend dem Ergebnis dieses Vergleichs Ausgangssignale abgibt, die die Zielsteuerung der Waren beeinflussen, und wobei eine Plausibilitätsprüfung durchgeführt wird, die angibt, ob die in den Stationen ermittelte Identifizierung, das Gewicht und das Volumen in sich stimmig sind.

2. Verfahren nach Patentanspruch 1,
**dadurch gekennzeichnet,**
daß die Plausibilitätsprüfung nach dem Etikettieren der Waren erfolgt.

3. Verfahren nach Anspruch 1 oder 2,
**dadurch gekennzeichnet**,
daß nach dem Etikettieren der Waren die erhaltenen Informationen oder zumindest eine Auswahl daraus gebucht wird.

4. Verfahren nach einem der Ansprüche 1 bis 3,
**dadurch gekennzeichnet**,
daß die Waren nach ihrer Messung mit einer Zielsteuerung etikettiert werden.

## Claims

1. A method for the identification, if necessary labelling and routing to destination of goods at the entry and/or exit of a warehouse, wherein the goods are continuously conveyed through a number of stations at the entry and/or exit of the warehouse at which the goods are mechanically identified, weighed, volumetrically measured and if necessary labelled, the information thereby obtained being transmitted to a computer, which compares the transmitted data with required data and in accordance with the result of the comparison delivers output signals which influence the routing to destination of the goods, a plausibility test being carried out which shows whether the identification, weight and volume determined at the stations are in agreement.

2. A method according to claim 1, characterized in that the plausibility test is carried out after the goods have been labelled.

3. A method according to claims 1 or 2, characterized in that after the goods have been labelled, the items of information obtained or at least a selection therefrom is booked.

4. A method according to one of claims 1 to 3, characterized in that after being measured, the goods are labelled with a routing to destination.

## Revendications

1. Procédé pour identifier des marchandises, le cas échéant pour les étiqueter, et pour commander leur destination, à l'entrée des marchandises et/ou à la sortie des marchandises d'un entrepôt, les marchandises étant, sur leur parcours, transportées à travers plusieurs postes à l'entrée des marchandises et/ou à la sortie des marchandises de l'entrepôt, postes dans lesquels les marchandises sont mécaniquement identifiées, pesées, soumises à une mesure de leur volume et, le cas échéant étiquetées, les informations ainsi obtenues étant alors transmises à un calculateur, lequel compare les données qui lui sont transmises à des données de consigne et délivre des signaux de sortie correspondant au résultat de cette comparaison, qui influent sur la commande de destination des marchandises, un contrôle de compatibilité étant alors réalisé, lequel indique si l'identification établie dans les postes, le poids et le volume sont mutuellement concordants.

2. Procédé selon la revendication 1, caractérisé en ce que le contrôle de compatibilité s'effectue après l'étiquetage des marchandises.

3. Procédé selon la revendication 1 ou 2, caractérisé en ce qu'après l'étiquetage des marchandises, les informations obtenues ou au moins une sélection de ces dernières sont comptabilisées.

4. Procédé selon l'une des revendications 1 à 3, caractérisé en ce que les marchandises, après leur mesure, sont étiquetées avec une direction de destination.
